# EUROPÄISCHE PATENTSCHRIFT

(11) **EP 0 336 290 B1**
(45) Veröffentlichungstag und Bekanntmachung des Hinweises auf die Patenterteilung: **02.03.1994**
(21) Anmeldenummer: 89105598.0
(22) Anmeldetag: 30.03.1989
(51) Int. Cl.: F17D 5/06

(54) **Erdverlegte Rohrleitung, insbesondere für Abwässer**
Buried pipeline, especially for waste water
Canalisation enterrée, spécialement pour eaux d'égouts

(30) Priorität: 06.04.1988 DE 3811454
(43) Veröffentlichungstag der Anmeldung: 11.10.1989
(73) Patentinhaber: THYSSEN INDUSTRIE AG, 45128 Essen (DE)
(72) Erfinder: Rammelsberg, Jürgen, Dr.-Ing., D-4690 Herne II (DE)

(56) Entgegenhaltungen:
- EP-A- 0 060 552
- WO-A-86/01621
- DE-B- 1 126 686
- GB-A- 2 058 279
- US-A- 3 485 085

## Beschreibung

Die Erfindung betrifft eine erdverlegte Rohrleitung, insbesondere für Abwasser, aus Rohren mit einem Muffenende und einem Einsteckende, wobei die Muffenverbindungen außen von einem Schutzmantel umgeben sind.

Rohre für erdverlegte Rohrleitungen sind in verschiedenen Ausführungen bekannt. Sie werden aus Beton, Steinzeug, Asbest-Zement oder auch aus duktilem Guß hergestellt. Das Muffenende dieses Rohres weist eine Kammer zur Aufnahme eines Dichtungsringes auf, auf dem sich das Einsteckende des benachbarten Rohres abstützt. Eine undichte Muffenverbindung stellt ein erhebliches Gefährdungspotential dar, weil daraus Abwasser mit giftigen Inhaltsstoffen ins Grundwasser infiltrieren kann. Das gilt insbesondere für Abwasserleitungen, die Trinkwasserschutzzonen durchqueren.

Man hat daran gedacht, diese Gefährdung durch den Bau doppelwandiger Rohrleitungen zu mindern, in deren Ringraum Leckagen abgeleitet werden. Dadurch werden die Probleme aber nur verlagert, denn auch die äußere Leitung kann undicht werden. Maßnahmen zur Beseitigung einer Leckage können erst dann ergriffen werden, wenn bekannt ist, daß und welche Muffenverbindung undicht geworden ist.

Aus den Dokumenten GB-A-2 058 279 und WO-A-86/01621 sind isolierte Rohrleitungen bekannt, bei denen außen auf den Rohrleitungen in Längsrichtung verlaufende Elektrokabel angeordnet sind. Wie dabei die Konstruktionen im Bereich von eventuellen Muffenverbindungen auszusehen haben, ist aus diesen Schritten nicht zu entnehmen.

Aufgabe der Erfindungen ist es daher, Leckagen im Bereich der Muffenverbindungen der einwandigen Mediumleitung festzustellen und zu orten.

Diese Aufgabe wird dadurch gelöst, daß längs jedes Rohres außen ein Kabel mit zwei isolierten Adern verlegt ist, daß die Adern im Bereich des Muffenendes und des Einsteckendes freigelegt und unter dem Schutzmantel mit den zugeordneten Adern des benachbarten Rohres elektrisch leitend verbunden sind. - Das Kabel wird an einem oder an beiden Enden der Rohrleitung mit einer Meßanordnung verbunden. Tritt im Bereich einer Muffenverbindung eine Leckage auf, dann gelangt die über die Dichtung austretende Flüssigkeit in den Bereich der beiden nackten Adern des Kabels, und es entsteht eine Elektrolytverbindung zwischen den beiden Adern. Das daraus resultierende, von der Meßanordnung erfaßte elektrische Signal zeigt die Leckage an. Aus gemessenen Widerstandsänderungen kann in bekannter Weise auch der Ort der Leckage bestimmt werden. Das Kabel ist vorzugsweise an der Unterseite der Rohrleitung angeordnet.

Um den Nachteil einer gesonderten Kabelverlegung mit dem Risiko von Beschädigungen beim Transport und beim Verlegen der Rohre sowie später zu vermeiden, ist es vorteilhaft, wenn das Kabel werksseitig unter einer Korrosionsschutzumhüllung des Rohres verlegt ist. Derartige Korrosionsschutz-Umhüllungen sind bei Rohren aus duktilem Guß bekannt. Günstig ist der Einsatz von Flachbandkabeln, weil diese nur wenig über den Umfang der Rohre vorstehen.

Es empfiehlt sich, die Aderverbindungen vor der Stirnseite des Muffenendes anzuordnen, weil das günstige Voraussetzungen für die Montagearbeiten schafft und weil außerdem die Aderverbindungen dann in einer zwischen der Stirnseite des Muffenendes und des Schutzmantels gebildeten Tasche angeordnet sind, die nur ein kleines Volumen hat, so daß bereits von kleinen aus der Dichtung austretenden Flüssigkeitsmengen ein elektrisches Signal ausgelöst wird.

Um einen Kontakt der nackten Adern des Kabels mit den metallischen Teilen im Bereich der Muffenverbindung zu vermeiden, können die Aderverbindungen in einen flüssigkeitsdurchlässigen Abstandshalter eingebettet sein. Der Abstandshalter kann im einfachsten Fall ein Schaumstoffkissen sein.

Im folgenden wird ein in der Zeichnung dargestelltes Ausführungsbeispiel der Erfindung erläutert; es zeigen:
- Fig. 1: teilweise einen Längsschnitt durch eine erdverlegte Rohrleitung im Bereich einer Muffenverbindung,
- Fig. 2: teilweise einen Axialschnitt durch ein Rohr.

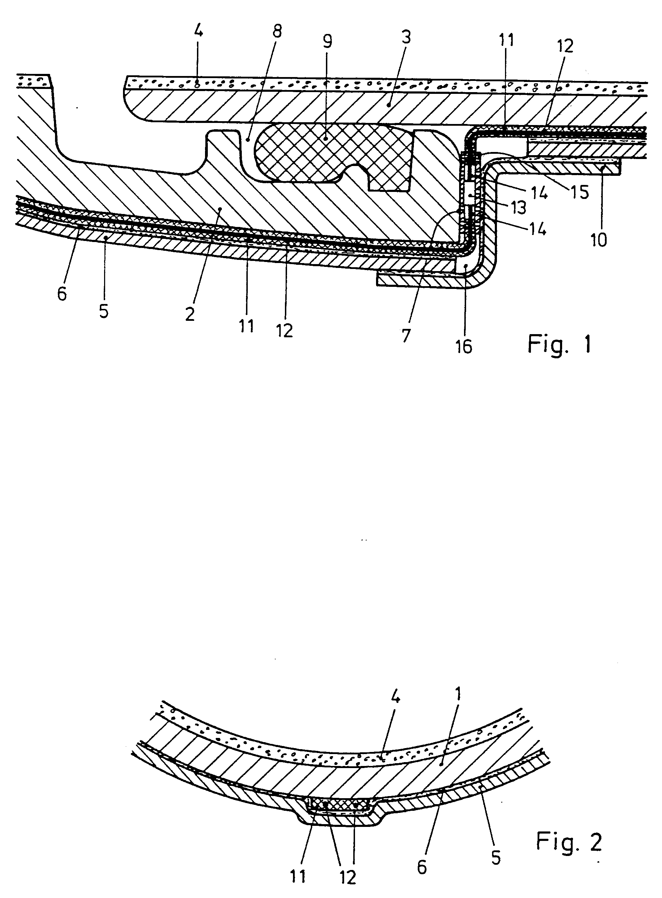

Die in der Zeichnung dargestellte erdverlegte Rohrleitung ist zur Abführung von Abwässern bestimmt. Sie besteht aus Rohren 1 mit einem Muffenende 2 und einem Einsteckende 3. Die Rohre 1 bestehen aus diffusionsdichtem duktilem Gußeisen. Sie besitzen innenseitig eine Korrosionsschutz-Auskleidung 4.
Außen sind die Rohre 1 von einer Korrosionsschutz-Umhüllung 5, z.B. aus PE, umgeben. Die Umhüllung 5 ist über eine Kleberschicht 6 an der Außenseite der Rohre 1 befestigt. Die Umhüllung 5 und die Kleberschicht 6 enden im Abstand vor dem Einsteckende 3 und erstrecken sich nahtlos über das gesamte Rohr bis zu der von der Stirnseite 7 des Muffenendes 2 gebildeten Ebene. Das Muffenende 2 weist in bekannter Weise eine Kammer 8 für einen Dichtungsring 9 auf, der von dem Einsteckende 3 des benachbarten Rohres 1 verpreßt wird. Die in Figur 1 dargestellte Muffenverbindung ist außen von einem Schutzmantel 10 umgeben, der aus dem Abschnitt eines Kunststoff-Schrumpfschlauches besteht, welcher bei der Montage der Rohrleitung aufgebracht wird. Der Schutzmantel 10 liegt außen auf der Umhüllung 5 des Muffenendes 2 und des Einsteckendes 3 sowie außerdem vor der Stirnseite 7 des Muffenendes.

Längs der Rohre 1 ist ein Flachbandkabel 11 mit zwei darin isoliert angeordneten Adern 12 verlegt. Das Flachbandkabel 11 ist unter der Kleberschicht 6 und damit auch unter der Umhüllung 5 angeordnet. Die Enden des Flachbandkabels 11 erstrecken sich jeweils über die Umhüllung 5 am Einsteckende 3 sowie über die Stirnseite 7 des Muffenendes 2 hinaus.

Beim Verlegen der Rohrleitung werden die Adern 12 an den Enden des Flachbandkabels 11 freigelegt bzw. abisoliert und mit den zugeordneten freigelegten Adern 12 des benachbarten Rohres 1 elektrisch leitend verbunden. Dazu werden übliche Verbinder 13 eingesetzt. Die Anordnung soll jedoch so sein, daß neben den Verbindern 13 jeweils Abschnitte nackter Adern 14 verbleiben. Jeder Verbinder 13 mit den anschließenden Abschnitten 14 nackter Adern wird in einen Abstandhalter 15 eingebettet, um Kontakte der nackten Adern 14 mit metallischen Teilen der Rohrleitung zu verhindern. Der Abstandshalter 15 kann im einfachsten Fall ein Schaumstoffkissen sein.

Bei der in der Zeichnung dargestellten Anordnung sind die Rohre 1 so verlegt, daß die Flachbandkabel 11 längs der Unterseite der Rohre 1 geführt sind. Dementsprechend befindet sich der Verbinder 13 mit den benachbarten nackten Adern 14 in einer zwischen der Stirnseite 7 des Muffenendes 2 und dem Schutzmantel 10 gebildeten Tasche 16.

Das Flachbandkabel 11 wird an einem Ende der Rohrleitung oder an beiden Enden mit einer Meßanordnung verbunden. Wenn eine der Muffenverbindungen undicht wird, fließt die austretende Flüssigkeit in die Tasche 16, und es entsteht eine Elektrolytverbindung zwischen den beiden nackten Adern 14 des Flachbandkabels 11. Das dadurch ausgelöste elektrische Signal wird von der Meßanordnung erfaßt, die eine Leckage anzeigt. Außerdem kann der Ort der Leckage bestimmt werden.

### BEZUGSZEICHENLISTE

- 1: Rohr
- 2: Muffenende
- 3: Einsteckende
- 4: Auskleidung
- 5: Umhüllung
- 6: Kleberschicht
- 7: Stirnseite
- 8: Kammer
- 9: Dichtungsring
- 10: Schutzmantel
- 11: Flachbandkabel
- 12: Adern
- 13: Verbinder
- 14: nackte Ader
- 15: Abstandshalter
- 16: Tasche

## Patentansprüche

1. Erdverlegte Rohrleitung, insbesondere für Abwasser, aus Rohren mit einem Muffenende (2) und einem Einsteckende (3), wobei die Muffenverbindungen außen von einem Schutzmantel (10) umgeben sind, dadurch gekennzeichnet, daß längs jedes Rohres (1) außen ein Kabel (11) mit zwei isolierten Adern (12) verlegt ist, daß die Adern (12) im Bereich des Muffenendes (2) und des Einsteckendes (3) freigelegt und unter dem Schutzmantel (10) mit den zugeordneten Adern (12) des benachbarten Rohres (1) elektrisch leitend verbunden sind.

2. Rohrleitung nach Anspruch 1, dadurch gekennzeichnet, daß das Kabel (11) unter einer Korrosionsschutz-Umhüllung (5) des Rohres (1) verlegt ist.

3. Rohrleitung nach Anspruch 1 oder 2, dadurch gekennzeichnet, daß das Kabel ein Flachbandkabel (11) ist.

4. Rohrleitung nach einem der Ansprüche 1 bis 3, dadurch gekennzeichnet, daß das Kabel (11) an der Unterseite der Rohrleitung angeordnet ist.

5. Rohrleitung nach einem der Ansprüche 1 bis 3, dadurch gekennzeichnet, daß die Aderverbindungen (13, 14) vor der Stirnseite (7) des Muffenendes (2) angeordnet sind.

6. Rohrleitung nach einem der Ansprüche 1 bis 4, dadurch gekennzeichnet, daß die Aderverbindungen (13, 14) in einen flüssigkeitsdurchlässigen Abstandshalter (15) eingebettet sind.

7. Rohrleitung nach einem der Ansprüche 1 bis 6, dadurch gekennzeichnet, daß der Abstandshalter (15) ein Schaumstoffkissen ist.

## Claims

1. An underground pipeline, particularly for waste water, comprising pipes with a socket end (2) and an insertion end (3), wherein the socket joints are externally surrounded by a protective covering (10), characterised in that a cable (11) with two insulated leads (12) is laid along the outside of each pipe (1), that the leads (12) are exposed in the region of the socket end (2) and of the insertion end (3) and are electrically conductively connected under the protective covering (10) to the associated leads (12) of the adjacent pipe (1).

2. A pipeline according to claim 1, characterised in that the cable (11) is laid under an anti-corrosion cladding (5) of the pipe (1).

3. A pipeline according to claim 1 or 2, characterised in that the cable is a flat strip cable (11).

4. A pipeline according to any one of claims 1 to 3, characterised in that the cable (11) is disposed on the underside of the pipeline.

5. A pipeline according to any one of claims 1 to 3, characterised in that the lead connections (13, 14) are disposed in front of the end face (7) of the socket end (2).

6. A pipeline according to any one of claims 1 to 4, characterised in that the lead connections (13, 14) are embedded in a distance piece (15) which is permeable to liquids.

7. A pipeline according to any one of claims 1 to 6, characterised in that the distance piece (15) is a pad of foamed material.

## Revendications

1. Conduite enterrée, en particulier pour eaux d'égouts, à tuyaux munis d'une extrémité à manchon (2) et d'une extrémité d'emboîtement (3) les liaisons par manchon étant entourées extérieurement par une enveloppe protectrice (10), caractérisée par le fait que le long de chaque tuyau (1) est posé extérieurement un câble (11) à deux conducteurs isolés (12), que les conducteurs (12) sont découverts dans la zone de l'extrémité à manchon (2) et de l'extrémité d'emboîtement (3) et sont reliés sous l'enveloppe protectrice (10), en conduisant électriquement, par les conducteurs associés (12) du tuyau voisin.

2. Conduite enterrée selon la revendication 1, caractérisée par le fait que le câble (11) est posé sous une chemise protectrice de la connexion (5) du câble (1).

3. Conduite enterrée selon la revendication 1 ou 2, caractérisée par le fait que le câble est un câble à bande plate (11).

4. Conduite enterrée selon la revendication 1 à 3, caractérisée par le fait que le câble (11) est disposé sur la face inférieure de la conduite.

5. Conduite enterrée selon la revendication 1 à 3, caractérisée par le fait que les liaisons des conducteurs (13, 14) sont disposées devant la face frontale (7) de l'extrémité à manchon (2).

6. Conduite enterrée selon la revendication 1 à 4, caractérisée par le fait que les liaisons des conducteurs (13, 14) sont logées dans un écarteur (15) étanche aux liquides.

7. Conduite enterrée selon la revendication 1 à 6, caractérisée par le fait que l'écarteur (15) est un coussin en matière alvéolaire.
